Europäisches Patentamt

European Patent Office

Office européen des brevets

(19)

(11) **EP 1 328 742 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(21) Anmeldenummer: **01971703.2**

(22) Anmeldetag: **08.09.2001**

(51) Int Cl.:
*F16H 61/06* *(2006.01)*  *F16H 61/08* *(2006.01)*

(86) Internationale Anmeldenummer:
**PCT/DE2001/003454**

(87) Internationale Veröffentlichungsnummer:
**WO 2002/035485 (02.05.2002 Gazette 2002/18)**

(54) **DRUCKSTEUERUNG UND VERFAHREN ZUM PROGRAMMGESTEUERTEN ANSTEUERN EINES DRUCKSTELLGLIEDS**

PRESSURE CONTROL DEVICE AND METHOD FOR PROGRAM-CONTROLLED ACTUATION OF A PRESSURE-REGULATING MECHANISM

DISPOSITIF DE COMMANDE DE PRESSION ET PROCEDE DE COMMANDE PAR PROGRAMME D'UN ACTIONNEUR

(84) Benannte Vertragsstaaten:
**DE FR GB**

(30) Priorität: **25.10.2000 DE 10052794**

(43) Veröffentlichungstag der Anmeldung:
**23.07.2003 Patentblatt 2003/30**

(73) Patentinhaber: **ROBERT BOSCH GMBH**
**70442 Stuttgart (DE)**

(72) Erfinder:
• **RAPP, Bernd**
**71282 Hemmingen (DE)**
• **ENRST, Tobias**
**71334 Waiblingen (DE)**
• **MUELLER, Thomas**
**71229 Leonberg (DE)**
• **MAIENBERG, Uwe**
**71229 Leonberg (DE)**

(56) Entgegenhaltungen:
**EP-A- 0 744 565**      **WO-A-00/34691**
**DE-A- 4 237 878**      **US-A- 4 855 913**

**Beschreibung**

Die vorliegende Erfindung betrifft eine Drucksteuerung zum programmgesteuerten Ansteuern von zumindest einem Druckstellglied in einem Getriebe gemäß dem Oberbegriff des Anspruchs 1 sowie ein Verfahren zum programmgesteuerten Ansteuern von zumindest einem Druckstellglied in einem Getriebe gemäß dem Oberbegriff des Anspruchs 14.

**Stand der Technik**

Es ist bekannt, Getriebe, beispielsweise Stufenautomaten oder CVT-Getriebe (continuously variable transmission = kontinuierliche variable Übersetzung), mit Drucksteuerungen auszustatten, die ein oder mehrere Druckstellglieder in einem Getriebe ansteuern, um die hydraulische Konstellation in dem Getriebe zu beeinflussen. Da die erforderliche Ansteuerungsart vom Getriebetyp sowie der Getriebebaureihe abhängt, wurden bisher speziell auf einen Getriebetyp beziehungsweise eine Getriebebaureihe zugeschnittene Drucksteuerungen beziehungsweise Verfahren zum programmgesteuerten Ansteuern von zumindest einem Druckstellglied eingesetzt, was einen entsprechend hohen Entwicklungsaufwand verursacht.

Aus der US-A-4 855 913 ist bei einem elektronischen Steuersystem für Getriebe bereits eine Drucksteuerung zum programmierten Ansteuern von Hydraulik- oder Magnetventilen bekannt, mit denen der Kupplungsdruck in Kupplungen des Getriebes beeinflusst wird. Dabei wird der Fluiddruck in der jeweiligen Kupplung bei einem Gangwechsel durch unterschiedliche zeitliche Ansteuerung der Magnetventile verändert, um für einen weicheren Schaltvorgang zu sorgen. Die Ansteuerung erfolgt mit Hilfe eines Mikroprozessors, der im Mikroprozessor gespeicherte Parameter verwendet, und zwar einen ersten Parameter, entsprechend einem reduzierten Druck, der zu Beginn des Kupplungseingriffs an der Kupplung angelegt werden soll, einen zweiten Parameter entsprechend der maximalen Zeitdauer des Zustands, in dem ein reduzierter Druck an der Kupplung angelegt werden soll, und einen dritten Parameter entsprechend der Geschwindigkeit, mit der der angelegte Druck während des Kupplungseingriffs vom reduzierten Druck aus erhöht werden soll. Dieser Parameter lassen sich ohne Veränderung des Programms konfigurieren, wobei jeder einzelne dieser Parameter maßgeschneidert wird, um den für ein sanftes Einrücken der jeweiligen Kupplung während jedes Gangwechsels optimalen Druckverlauf festzulegen.

Aus der gattungsbildenden WO 00/34691 A ist ein Verfahren zum Steuern eines Automatikgetriebes, bei dem die Steuerung während des Schaltvorgangs mit Hilfe eines in einem Kennfeld abgelegten Motoreingriffaktors erfolgt. Der Druck in der Schaltkupplung wird durch zeitlich nachfolgende Zustände bestimmt, wobei in den einzelnen Zuständen der Druck aus einer Summe von Druckwerten gebildet wird, die nach fest vorgegebenen Rechenregeln berechnet werden.

Ausgehend hiervon liegt der Erfindung die Aufgabe zugrunde, eine Drucksteuerung und ein Verfahren der eingangs genannten Art dahingehend zu verbessern, dass sie sich mit einfachen Mitteln an verschiedene Getriebetypen bzw. Getriebebaureihen anpassen lässt.

Diese Aufgabe wird erfindungsgemäß durch die Merkmale im Kennzeichenteil unabhängigen Ansprüche gelöst.

**Vorteile der Erfindung**

Durch die Merkmale der erfindungsgemäßen Drucksteuerung und des erfindungsgemäßen Verfahrens kann ein und dieselbe Drucksteuerung mit verhältnismäßig geringem Aufwand an verschiedene Getriebetypen beziehungsweise Getriebebaureihen angepasst werden. Anders ausgedrückt kann die erfindungsgemäße Drucksteuerung nur durch Daten für einen bestimmten Getriebetyp beziehungsweise für eine bestimmte Getriebebaureihe konfiguriert werden. Ferner kann die erfindungsgemäße Druckssteuerung mit geringem Aufwand auch an unterschiedliche Getriebearten (zum Beispiel: Stufenautomat, CVT-Getriebe, automatisches Schaltgetriebe) angepasst werden, da zumindest ein großer Teil des Programms unverändert übernommen werden kann.

Die folgenden Ausführungen beziehen sich sowohl auf die erfindungsgemäße Drucksteuerung als auch auf das erfindungsgemäße Verfahren.

Vorzugsweise ist vorgesehen, dass die Zustände durch eine Zustandsmaschine koordiniert werden. Die Parameter einer derartigen Zustandsmaschine können beispielsweise über eine Tabelle definiert werden. Jeder Eintrag der Tabelle kann dabei die folgenden Teileinträge aufweisen:

- einen Hinweis auf eine später näher erläuterte Basisdruckfunktion
- einen Hinweis auf eine ebenfalls später erläuterte Ofrsetdruckfunktion
- einen Hinweis auf eine ebenfalls später näher erläuterte Gradientenfunktion
- einen Hinweise auf einen oder mehrere Folgezustände.

Weiterhin können Kriterien vorgesehen sein, wobei bei einer Erfüllung von zumindest einem Kriterium ein Wechsel von einem aktuellen Zustand zu einem Folgezustand erfolgt. Ein Hinweis auf ein Kriterium oder mehrere Kriterien kann ebenfalls Bestandteil eines Tabelleneintrags sein.

Die Kriterien, die zu einem Wechsel von einem aktuellen Zustand zu einem Folgezustand führen, können Zeitkriterien umfassen. Diese Zeitkriterien können entweder dazu führen, dass ein Zustand nach einer vorgegebenen festen Zeitspanne verlassen wird, oder dass ein Zustand nach einer berechneten oder geschätzten Zeitspanne verlassen wird.

Weiterhin ist es denkbar, dass die Kriterien, deren Erfüllung einen Wechsel von einem aktuellen Zustand zu einem Folgezustand verursacht, Ereigniskriterien umfassen. Ein derartiges Ereigniskriterium kann beispielsweise das Erreichen eines vorgegebenen Drucks betreffen. Ebenso ist es jedoch denkbar, dass die Ereigniskriterien irgendwelche Getriebezustände und/oder andere Umgebungszustände berücksichtigen.

Bei einer bevorzugten Ausführungsform der vorliegenden Erfindung ist vorgesehen, dass die Drucksteuerung mit einer Schaltablaufsteuerung zusammenwirkt, die Schaltungen koordiniert, die Wechseln von Konstellationen in einem Getriebe entsprechen, wobei ein Wechsel der Konstellation eine Veränderung der Kraftübertragung des Getriebes ergibt, und wobei ein Ablauf einer Schaltung in Phasen unterteilt ist. In ähnlicher Weise kann das erfindungsgemäße Verfahren mit einem Verfahren zum Koordinieren von entsprechenden Schaltungsabläufen zusammenwirken. In diesem Zusammenhang sind Ausführungsformen möglich, bei denen bestimmte Phasen bestimmte Zustände fordern und/oder bei denen bestimmte Zustände bestimmte Phasen fordern.

Zu diesem Zweck sind die Zustände vorzugsweise den Phasen zugeordnet.

Dabei können mehrere Zustände einer Phase zugeordnet werden. Auch in diesem Fall fallen jedoch vorzugsweise die Phasengrenzen mit Zustandsgrenzen zusammen.

Bei einer bestimmten Ausführungsform der vorliegenden Erfindung ist jedem Zustand z eine Phase e(z) zugeordnet und es gilt:

$$z(t + 1) = \begin{cases} z(t) + 1; \text{ falls } e(z) < \text{Phase}(t) \text{ und } e(z + 1) \leq \text{Phase}(t) \\ z(t) + 1; \text{ falls } trg_{m(z)} = 1 \text{ und } e(z + 1) \leq \text{Phase}(t) \\ z(t); \text{ sonst} \end{cases}$$

wobei $trg_{m(z)} = 1$ erfüllt ist, wenn ein Kriterium erfüllt ist, und wobei die Phase(t) sich auf die Folgephase bezieht, sofern ein Phasenwechsel ansteht. Aus diesem Zusammenhang ergibt sich, dass insbesondere dann von einem aktuellen Zustand zu einem Folgezustand gewechselt werden kann, wenn sich die Phase ändert oder wenn ein Kriterium erfüllt wird. Immer wenn sich die Phase ändert, wird überprüft, ob die dem aktuellen Zustand zugewiesene Phase kleiner oder gleich der neuen Phase ist. In diesem Fall wird der aktuelle Zustand verlassen und zu einem Folgezustand, beispielsweise dem nächsten Zustand, verzweigt.

Der Soll-Druckverlauf zu einem Zeitpunkt (t) ist gegeben als:

$$p_S(t) = p_B(t) + p_O(t),$$

wobei $p_B$ ein Basisdruck und $p_o$ ein Offsetdruck ist.

Für den Basisdruck gilt dabei vorzugsweise:

$$p_B(t) = f_{i(z)}(t, \vec{x}) \text{ mit } z = z(t),$$

wobei $f_{i(z)}$ eine Basisdruckfunktion ist, die aus einer Menge i von Basisdruckfunktionen auswählbar ist, und wobei der Vektor $\vec{x}$ die Zustände des Getriebes und/oder der Umgebung angibt. Jede Basisdruckfunktion $f_{i(z)}$ kann beispielsweise ein Konstante, eine Funktion erster Ordnung oder eine andere geeignete Funktion sein, die entsprechend dem Getriebetyp beziehungsweise der Getriebebaureihe vorgesehen wird.

Weiterhin gilt für den Offsetdruck vorzugsweise:

$$p_0(t) = \begin{cases} p_0(t-1) + \int g_{j(z)}(t, \vec{x})\,dt; & \text{falls } z := z(t) = z(t-1) \\ h_{k(z)}(t, p_0(t-1), \vec{x}); & \text{falls } z := z(t) \neq z(t-1) \end{cases}$$

wobei $g_{j(z)}(t, \vec{x})$ eine Druck-Gradientenfunktion ist, die aus einer Menge j von Gradientenfunktionen wählbar ist, wobei $h_{k(z)}(t, p_0(t-1), \vec{x})$ x) eine Zustandsänderungsfunktion ist, die aus einer Menge k von Zustandsänderungsfunktionen wählbar ist, und wobei der Vektor $\vec{x}$ die Zustände des Getriebes und/oder der Umgebung angibt. Auf die Funktionen $g_{j(z)}$ und $h_{k(z)}$ können beispielsweise durch eine Konstante, eine Funktion erster Ordnung oder eine andere geeignete Funktion gebildet sein, die entsprechend dem Getriebetyp beziehungsweise der Getriebebaureihe vorgesehen wird.

Die über den Vektor $\vec{x}$ berücksichtigten Zustände der Umgebung können zum Beispiel die Schaltart und/oder die Abtriebsdrehzahl und/oder die Öltemperatur und/oder die Motordrehzahl und/oder das Motorausgangsmoment und/oder die Drosselklappenstellung umfassen. Sowohl die erfindungsgemäße Drucksteuerung als auch das erfindungsgemäße Verfahren sind dadurch an die verschiedensten Getriebetypen und Fahrzeuge anpassbar.

Weiterhin kann vorgesehen sein, dass temperaturabhängige Nichtlinearitäten durch eine Temperatur-Kompensationseinrichtung ausgeglichen werden. Dieser Ausgleich kann beispielsweise über einen Anteil des Offsetdrucks erfolgen. Ebenso kann vorgesehen sein, dass Getriebe- und/oder Umgebungsgrößen durch eine Rückkopplungseinrichtung zurückgekoppelt werden. Auch eine derartige Rückkopplung kann in Form eines Anteils des Offsetdrucks berücksichtigt werden.

## Zeichnungen

Die Erfindung wird nachfolgend an Hand der zugehörigen Zeichnungen noch näher erläutert.
Es zeigen:

Figur 1    ein Blockschaltbild der erfindungsgemäßen Drucksteuerung;

Figur 2    ein Beispiel für einen Druckverlauf während eines Schaltvorgangs sowie ein Beispiel für die Zuordnung von Zuständen zu Phasen;

Figur 3    ein weiteres Beispiel für eine Zuordnung von Zuständen zu Phasen;

Figur 4    ein Ablaufdiagramm, das veranschaulicht, wann von einem aktuellen Zustand zu einem Folgezustand gewechselt wird;

Figur 5    ein Beispiel für einen Druckverlauf, bei dem der Druck um einen vorgegebenen Wert verändert wird;

Figur 6    ein Beispiel für einen Druckverlauf, bei dem der Druck auf einen vorgegebenen Wert eingestellt wird;

Figur 7    ein Beispiel für einen Druckverlauf, bei dem der Druck zunächst auf einen vorgegebenen Wert gebracht und anschließend entsprechend dem Verlauf einer Basisdruckfunktion eingestellt wird;

Figur 8    ein Beispiel für einen Druckverlauf, bei dem der Druck zunächst auf einen berechneten Wert eingestellt wird, wobei dieser Wert aus einem Zieldruck und dem aktuellen Druckgradienten bestimmt wird; und

Figur 9    ein Beispiel für einen Druckverlauf mit unterschiedlichen Gradienten innerhalb eines Zustands.

## Beschreibung der Ausführungsbeispiele

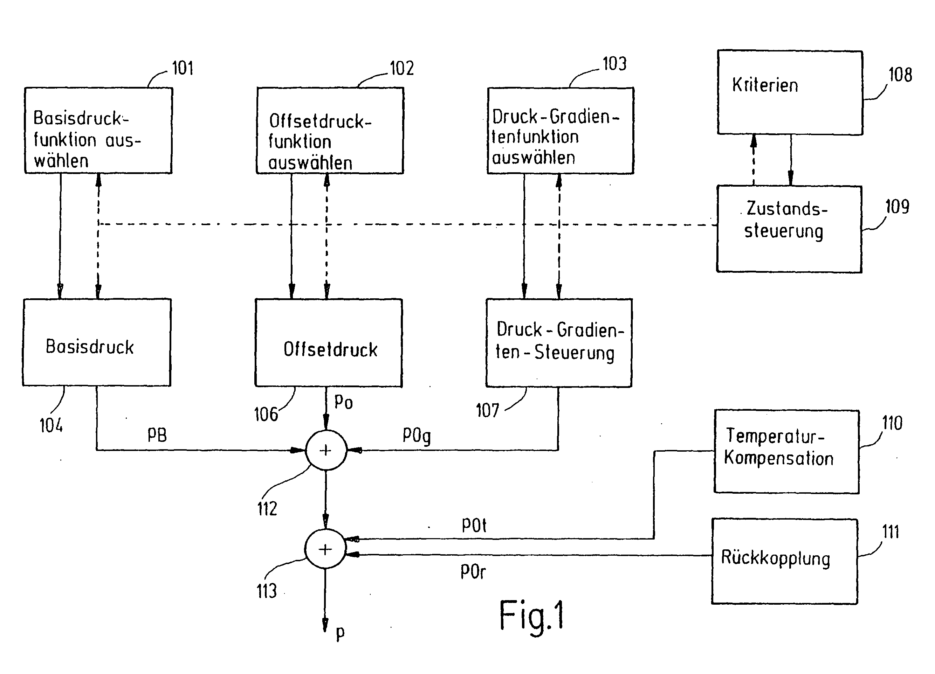

Figur 1 zeigt ein schematisches Blockschaltbild einer Ausführungsform der erfindungsgemäßen Drucksteuerung. Im Block 101 wird eine Basisdruckfunktion ausgewählt, die eine Konstante, eine Funktion ersten Grades oder eine andere geeignete Funktion sein kann. Mit Hilfe der im Block 101 ausgewählten Basisdruckfunktion kann im Block 104 der Basisdruck bestimmt werden. Im Block 102 wird eine Offsetdruckfunktion ausgewählt, die ebenfalls durch eine Konstante, eine Funktion erster Ordnung oder eine andere geeignete Funktion gebildet sein kann. Im Block 106 wird der Offsetdruck entsprechend bestimmt. Im Block 107 wird eine Druck-Gradientenfunktion ausgewählt, die in der Regel die zeitliche Ableitung eines Drucks umfasst und die ebenfalls durch eine Konstante, eine Funktion erster Ordnung oder eine andere Funktion gebildet sein kann. Der Verlauf des Druckgradienten wird im Block 107 ermittelt. Der Block 104 liefert einen Basisdruck $p_B$, der einem Addierer 112 zugeführt wird. Diesem Addierer 112 wird von den Blöcken 106 und 107 weiterhin ein Offsetdruck $p_o$ und $p_{0g}$ zugeführt. Der Ausgang des Addierers 112 ist mit dem Eingang eines weiteren Addierers 113 verbunden, dem weiterhin ein Offsetdruck einer Temperatur-Kompensationseinrichtung 110 $p_{0t}$ sowie ein Offsetdruck $p_{0r}$ einer Rückkopplungseinrichtung 111 zugeführt wird. Der Addierer 113 liefert an seinem Ausgang den Soll-Druck. Eine Zustandssteuerung 109 steht mit den Blöcken 101 bis 107 sowie einem Block 108 in Verbindung. Der Block 108 überwacht die Erfüllung von Kriterien, wobei eine Erfüllung eines Kriteriums zu einem Wechsel des Zustands von einem aktuellen Zustand z(t) zu einem Folgezustand z(t+1) führen kann. Auf diese Weise wird ermöglicht, dass die Blöcke 101 bis 107 stets entsprechend dem aktuellen Zustand arbeiten.

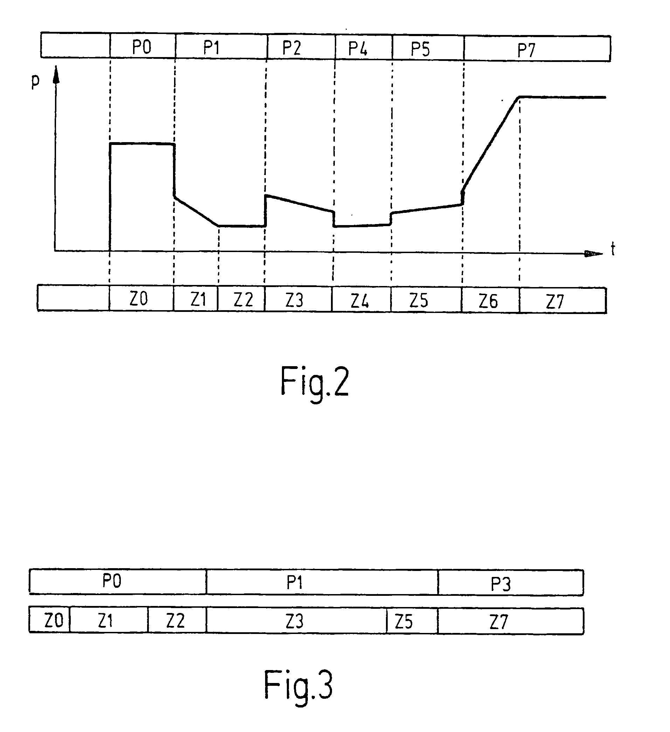

Figur 2 zeigt ein Beispiel für einen Druckverlauf während eines Schaltvorgangs sowie ein Beispiel für die Zuordnung von Zuständen zu Phasen. Figur 2 ist das Zusammenwirken der erfindungsgemäßen Drucksteuerung mit einer Schaltablaufsteuerung zu entnehmen, die Schaltungen koordiniert, die Wechseln von Konstellationen in einem Getriebe entsprechen. Dabei ergibt ein Wechsel der Konstellation in dem Getriebe eine Veränderung der Kraftübertragung des Getriebes. Der Ablauf der in Figur 2 dargestellten Schaltung ist in Phasen P0, P1, P2, P4, P5 und P7 unterteilt. Bei dem in Figur 2 dargestellten Gangwechsel werden die Phasen P3 und P6 nicht verwendet, die jedoch bei anderen Schaltungen beziehungsweise Gangwechseln vorgesehen sein können. Wie Figur 2 zu entnehmen ist, ist ein Zustand Z0 der Phase P0 zugeordnet. Die Zustände Z1 und Z2 sind der Phase P1 zugeordnet. Der Zustand Z3 ist der Phase P2 zugeordnet. Der Zustand Z4 ist der Phase P4 zugeordnet. Der Zustand Z5 ist der Phase P5 zugeordnet und die Zustände Z6 und Z7 sind der Phase P7 zugeordnet. Dabei verursacht jeder Zustand einen für ihn charakteristischen Druckverlauf, wie dies Figur 2 ebenfalls zu entnehmen ist.

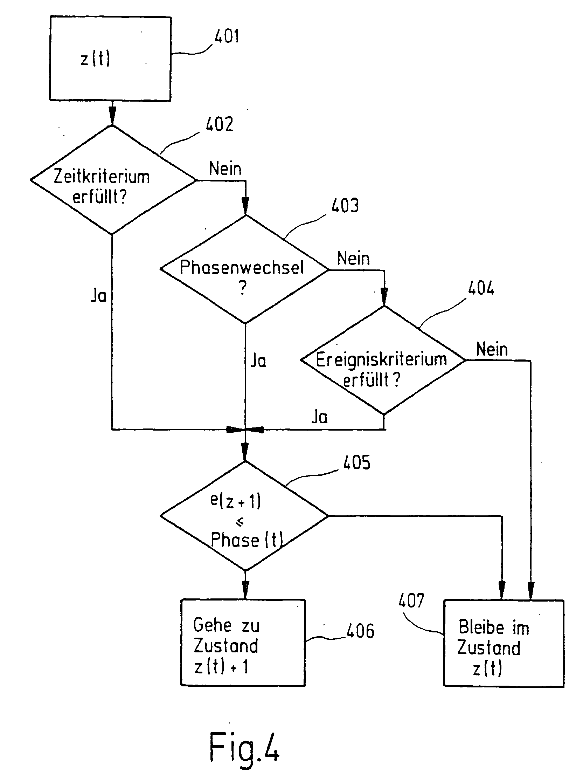

Figur 3 zeigt ein weiteres Beispiel für eine Zuordnung von Zuständen zu Phasen. Gemäß Figur 3 sind die Zustände Z0, Z1 und Z2 der Phase P0 zugeordnet. Die Zustände Z3 und Z5 sind der Phase P1 zugeordnet und der Zustand Z7 ist der Phase P3 zugeordnet. Obwohl den Phasen P0 und P1 gemäß Figur 3 jeweils mehrere Zustände zugeordnet sind, fallen die Phasengrenzen mit Zustandsgrenzen zusammen. Figur 4 zeigt ein Ablaufdiagramm, das veranschaulicht, wann von einem aktuellen Zustand zu einem Folgezustand gewechselt wird. Im Block 401 befindet sich die Druckschaltung im Zustand z(t). Im Block 402 wird überprüft ob ein Zeitkriterium erfüllt ist. Ist dies der Fall wird zu einem Block 405 verzweigt, der später beschrieben wird. Wenn im Block 402 festgestellt wird, dass kein Zeitkriterium erfüllt ist, wird zum Block 403 verzweigt, wo überprüft wird, ob ein Phasenwechsel ansteht. Ist dies der Fall wird ebenfalls zum Block 405 verzweigt. Wird im Block 403 festgestellt, dass kein Phasenwechsel stattfindet so wird zu einem Block 404 verzweigt, in dem überprüft wird ob ein Ereigniskriterium erfüllt ist. Ist dies der Fall wird ebenfalls zum Block 405 verzweigt. Der Block 405 überprüft, ob der nächste Zustand einer Phase zugeordnet ist, die kleiner oder gleich der aktuellen Phase ist. Ist dies der Fall, wird zu einem Folgezustand gewechselt, der durch z(t)+1 gegeben ist. Anderenfalls wird im Zustand z(t) verweilt (Block 407).

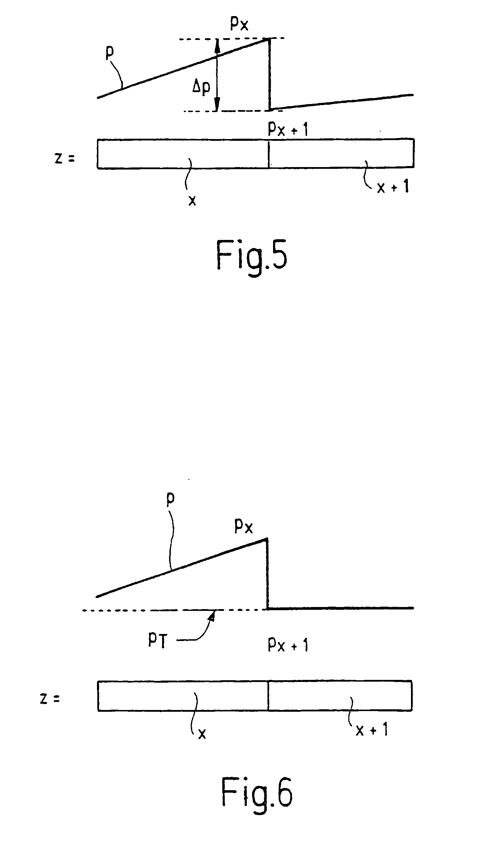

Figur 5 zeigt ein Beispiel für einen Druckverlauf, bei dem der Druck um einen vorgegebenen Wert verändert wird. Diese Funktion ist vorzugsweise nur während einer Zustandsänderung aktiv. In diesem Fall wird der Druck p um einen bestimmten Betrag Δp gemäß der folgenden Gleichung verändert:

$$p_{x+1} = p_x + \Delta p.$$

Dabei ist $p_x$ der Wert des Drucks vor der Zustandsänderung, die durch einen Wechsel vom Zustand z(x) zum Folgezustand z(x+1) erfolgt.

Figur 6 zeigt ein Beispiel für einen Druckverlauf, bei dem der Druck auf einen vorgegebenen Wert eingestellt wird. Diese Funktion stellt den Druck gemäß der folgenden Gleichung ein:

$$p_{x+1} = p_T.$$

Der Druck $p_T$ ist ein absoluter Druckwert, das heißt er ist unabhängig vom vor dem Zustandswechsel herrschenden Druck. Der Basisdruck $p_B$ wird in diesem Fall vorzugsweise inaktiviert, das heißt, dass Veränderungen des Basisdrucks $p_B$ nicht beachtet werden.

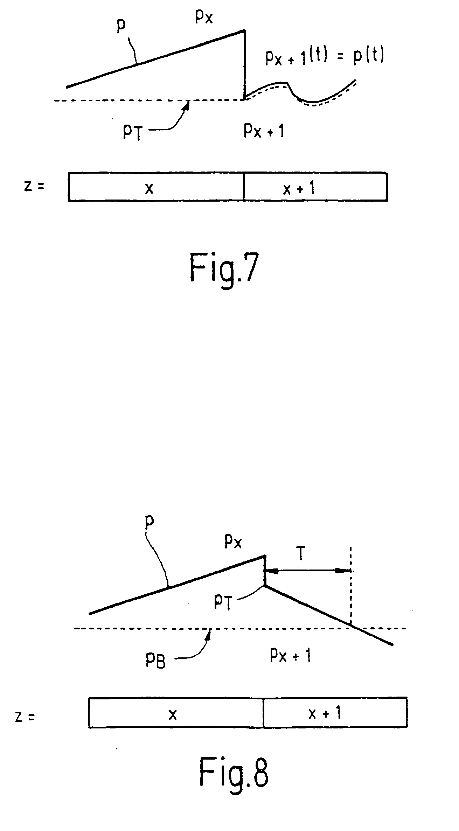

Figur 7 zeigt ein Beispiel für einen Druckverlauf, bei dem der Druck zunächst auf einen vorgegebenen Wert gebracht und anschließend entsprechend dem Verlauf einer Basisdruckfunktion eingestellt wird. Das Verhalten dieser Funktion ist ähnlich wie das der Funktion gemäß Figur 6. Beim Wechsel vom Zustand z(x) zum Folgezustand z(x+1) wird der Druck zunächst gemäß der folgenden Gleichung eingestellt:

$$p_{x+1} = p_T.$$

Anschließend wird der Verlauf des Drucks entsprechend dem Verlauf einer Basisdruckfunktion eingestellt, wobei ein Druckverlauf, wie er in Figur 7 dargestellt ist, beispielsweise dann eingesetzt werden kann, wenn eine Veränderung eines hochdynamischen Signals (beispielsweise das öffnen der Drosselklappe) den Druckverlauf beeinflussen sollte.

Figur 8 zeigt ein Beispiel für einen Druckverlauf, bei dem der Druck zunächst auf einen berechneten Wert $p_T$ eingestellt wird, wobei dieser Wert aus einem Zieldruck und dem aktuellen Druckgradienten über die folgende Gleichung bestimmt werden kann:

$$p_T = p_B - \dot{p}_{grad} \cdot T.$$

Das bedeutet, dass der Basisdruck nach einer Zeit t=T erreicht wird. Dabei kann vorgesehen sein, dass der Gradient zum Zeitpunkt t=T nicht automatisch gestoppt wird, sondern dass bis zum Ende des Zustands fortgefahren wird.

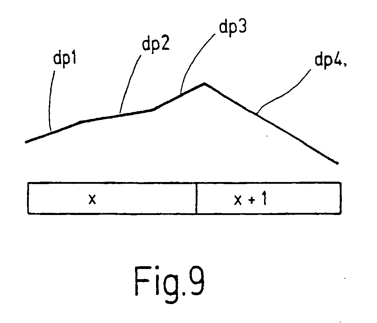

Figur 9 zeigt ein Beispiel für einen Druckverlauf mit unterschiedlichen Gradienten innerhalb eines Zustands. Dabei sind die Kurvenabschnitte mit unterschiedlichen Steigungen mit $dp_1$, $dp_2$, $dp_3$ und $dp_4$ bezeichnet.

**Patentansprüche**

1. Drucksteuerung zum programmierten Ansteuern von zumindest einem Druckstellglied, um über den Druck (p) die hydraulische Konstellation in einem Getriebe zu beeinflussen, wobei die programmgesteuerte Ansteuerung über Wechsel von Zuständen (z; Z0, Z2, Z3, Z4, Z5, Z6, Z7) von aktuellen Zuständen (z(t)) zu Folgezuständen (z(t+1)) erfolgt, wobei die Zustände (z; Z0, Z2, Z3, Z4, Z5, Z6, Z7) ohne Veränderung des Programms konfigurierbar sind, wobei sich der Verlauf eines Soll-Drucks in den Zuständen (z; Z0, Z2, Z3, Z4, Z5, Z6, Z7) mindestens aus einem Basisdruck ($p_B$) und einem Offsetdruck ($p_O$) zusammensetzt, die addiert werden, **dadurch gekennzeichnet, dass** der Basisdruck ($p_B$) und der Offsetdruck ($p_O$) jeweils mit Hilfe einer aus einer Menge von vorgesehenen Funktionen auswählbaren Funktion bestimmt werden.

2. Drucksteuerung nach Anspruch 1, **dadurch gekennzeichnet, dass** die Zustände (z; Z0, Z1, Z2, Z3, Z4, Z5, Z6, Z7) durch eine Zustandsmaschine koordiniert werden.

3. Drucksteuerung nach einem der vorhergehenden Ansprüche, **dadurch gekennzeichnet, dass** Kriterien vorgesehen sind, und dass bei einer Erfüllung von zumindest einem Kriterium ein Wechsel von einem aktuellen Zustand (z(t)) zu einem Folgezustand (z(t+1)) erfolgt.

4. Drucksteuerung nach einem der vorhergehenden Ansprüche, **dadurch gekennzeichnet, dass** die Kriterien Zeitkriterien umfassen.

5. Drucksteuerung nach einem der vorhergehenden Ansprüche, **dadurch gekennzeichnet, dass** die Kriterien Ereigniskriterien umfassen.

6. Drucksteuerung nach einem der vorhergehenden Ansprüche, **dadurch gekennzeichnet, dass** sie mit einer Schaltablaufsteuerung zusammenwirkt, die Schaltungen koordiniert, die Wechseln von Konstellationen in einem Getriebe entsprechen, wobei ein Wechsel der Konstellation eine Veränderung der Kraftübertragung des Getriebes ergibt, und wobei ein Ablauf einer Schaltung in Phasen (P0, P1, P2, P3, P4, P5, P6, P7) unterteilt ist.

7. Drucksteuerung nach einem der vorhergehenden Ansprüche, **dadurch gekennzeichnet, dass** die Zustände (z; Z0, Z1, Z2, Z3, Z4; P5, P6, P7) den Phasen (P0, P1, P2, P3, P4; P5, P6, P7) zugeordnet sind.

8. Drucksteuerung nach einem der vorhergehenden Ansprüche, **dadurch gekennzeichnet, dass** mehrere Zustände (Z0, Z1, Z2; Z3, Z5) einer Phase (P0; P1) zugeordnet sind.

9. Drucksteuerung nach einem der vorhergehenden Ansprüche, **dadurch gekennzeichnet, dass** jedem Zustand (z) eine Phase (e(z)) zugeordnet ist, und dass gilt

$$z(t+1) = \begin{cases} z(t) + 1; & \text{falls } e(z) < \text{Phase}(t) \text{ und } e(z+1) \leq \text{Phase}(t) \\ z(t) + 1; & \text{falls } trg_{m(z)} = 1 \text{ und } e(z+1) \leq \text{Phase}(t) \\ z(t); & \text{sonst} \end{cases},$$

wobei $trg_{m(z)} = 1$ erfüllt ist, wenn ein Kriterium erfüllt ist, und wobei die Phase (t) sich auf die Folgephase bezieht, sofern ein Phasenwechsel ansteht.

10. Drucksteuerung nach einem der vorhergehenden Ansprüche, **dadurch gekennzeichnet, dass** für den Basisdruck ($p_B$) gilt:

$$p_B(t) = f_{i(z)}(t, \vec{x}) \text{ mit } z = z(t),$$

wobei $f_{i(z)}$ eine Basisdruckfunktion ist, die aus einer Menge i von Basisdruckfunktionen auswählbar ist, und wobei der Vektor $\vec{x}$ die Zustände des Getriebes und/oder der Umgebung angibt.

11. Drucksteuerung nach einem der vorhergehenden Ansprüche, **dadurch gekennzeichnet, dass** für den Offsetdruck ($p_O$) gilt:

$$p_O(t) = \begin{cases} p_O(t-1) + \int g_{j(z)}(t, \vec{x}) dt; & \text{falls } z := z(t) = z(t-1) \\ h_{k(z)}(t, p_O(t-1), \vec{x}); & \text{falls } z := z(t) \neq z(t-1) \end{cases},$$

wobei $g_j(t, \vec{x})$ eine Druck-Gradientenfunktion ist, die aus einer Menge j von Gradientenfunktionen wählbar ist, wobei $h_{k(z)}(t, p_O(t-1), \vec{x})$ eine Zustandsänderungsfunktion ist, die aus einer Menge k von Zustandsänderungsfunktionen wählbar ist, und wobei der Vektor $\vec{x}$ die Zustände des Getriebes und/oder der Umgebung angibt.

12. Drucksteuerung nach einem der vorhergehenden Ansprüche, **dadurch gekennzeichnet, dass** die Zustände der Umgebung die Schaltart und/oder die Abtriebsdrehzahl und/oder die Öltemperatur und/oder die Motordrehzahl und/oder das Motorausgangsmoment und/oder die Drosselklappenstellung umfassen.

13. Drucksteuerung nach einem der vorhergehenden Ansprtlche, **dadurch gekennzeichnet, dass** sie eine Temperatur-Kompensationseinrichtung aufweist, die temperaturabhängige Niehtlinearitäten ausgleicht, und/oder dass sie eine Rückkopplungseinrichtung aufweist, die Getriebe- und/oder Umgebungsgrößen zurückkoppelt.

14. Verfahren zum programmgesteuerten Ansteuern von zumindest einem Druckstellglied, um über den Druck die hydraulische Konstellation in einem Getriebe zu beeinflussen, wobei die programmgesteuerte Ansteuerung über Wechsel von Zuständen (z; Z0, Z2, Z3, Z4, Z5, Z6, Z7) von aktuellen Zustanden (z(t)) zu Folgezuständen (z(t+1)) erfolgt, und wobei die Zustände (z; Z0, Z2, Z3, Z4, Z5, Z6, Z7) ohne Veränderung des Programms konfiguriert werden, wobei sich der Verlauf eines Soll-Drucks in den Zuständen (z; Z0, Z2, Z3, Z4, Z5, Z6, 27) aus einem Basisdruck ($p_B$) und mindestens einem Offsetdruck ($p_O$) zusammensetzt, die addiert werden, **dadurch gekennzeichnet, dass** der Basisdruck ($p_B$) und der Offsetdruck ($p_O$) jeweils mit Hilfe einer aus einer Menge von vorgesehenen Funktionen auswählbaren Funktion bestimmt werden.

**15.** Verfahren nach Anspruch 14, **dadurch gekennzeichnet, dass** die Zustände (z; Z0, Z1, Z2, Z3, Z4, Z5, Z6, Z7) durch eine Zustandsmaschine koordiniert werden.

**16.** Verfahren nach einem der Ansprüche 14 bis 15, **dadurch gekennzeichnet, dass** Kriterien vorgesehen sind, und dass bei einer Erfüllung von zumindest einem Kriterium ein Wechsel von einem aktuellen Zustand (z(t)) zu einem Folgezustand (z(t+1)) erfolgt.

**17.** Verfahren nach einem der Ansprüche 14 bis 16, **dadurch gekennzeichnet, dass** die Kriterien Zeitkriterien umfassen.

**18.** Verfahren nach einem der Ansprüche 14 bis 17, **dadurch gekennzeichnet, dass** die Kriterien Ereigniskriterien umfassen.

**19.** Verfahren nach einem der Ansprüche 14 bis 18, **dadurch gekennzeichnet, dass** es mit einem Verfahren zum Koordinieren von Schaltungsabläufen zusammenwirkt, die Wechseln von Konstellationen in einem Getriebe entsprechen, wobei ein Wechsel der Konstellation eine Veränderung der Kraftübertragung des Getriebes ergibt, und wobei ein Ablauf einer Schaltung in Phasen (P0, P1, P2, P3, P4, P5, P6, P7) unterteilt ist.

**20.** Verfahren nach einem der Ansprüche 14 bis 19, **dadurch gekennzeichnet, dass** die Zustände (z; Z0, Z1, Z2, Z3, Z4, Z5, Z6, Z7) den Phasen (P0, P1, P2, P3, P4, P5, P6, P7) zugeordnet sind.

**21.** Verfahren nach einem der Ansprüche 14 bis 20, **dadurch gekennzeichnet, dass** mehrere Zustände (Z0, Z1, Z2; Z3, Z5) einer Phase (P0; P1) zugeordnet sind.

**22.** Verfahren nach einem der Ansprüche 14 bis 21, **dadurch gekennzeichnet, dass** jedem Zustand (z) eine Phase (e(z)) zugeordnet ist, und dass gilt

$$z(t+1) = \begin{cases} z(t) + 1; & \text{falls } e(z) < \text{Phase}(t) \text{ und } e(z+1) \leq \text{Phase}(t) \\ z(t) + 1; & \text{falls } trg_{m(z)} = 1 \text{ und } e(z+1) \leq \text{Phase}(t) \\ z(t); & \text{sonst} \end{cases} ,$$

wobei $trg_{m(z)} = 1$ erfüllt ist, wenn ein Kriterium erfüllt ist, und wobei die Phase(t) sich auf die Folgephase bezieht, sofern ein Phasenwechsel ansteht.

**23.** verfahren nach einem der Ansprüche 14 bis 22, **dadurch gekennzeichnet, dass** für den Basisdruck ($p_B$) gilt:

$$p_B(t) = f_{i(z)}(t, \vec{x}) \text{ mit } z = z(t),$$

wobei $f_{i(z)}$ eine Basisdruckfunktion ist, die aus einer Menge i von Basisdruckfunktionen auswählbar ist, und wobei der Vektor $\vec{x}$ die Zustände des Getriebes und/oder der Umgebung angibt.

**24.** Verfahren nach einem der Ansprüche 14 bis 23, **dadurch gekennzeichnet, dass** für den Offsetdruck ($p_o$) gilt:

$$p_o(t) = \begin{cases} p_o(t-1) + \int g_{j(z)}(t, \vec{x}) dt; & \text{falls } z := z(t) = z(t-1) \\ h_{k(z)}(t, p_o(t-1), \vec{x}); & \text{falls } z := z(t) \neq z(t-1) \end{cases} ,$$

wobei $g_j(t, \bar{x})$ eine Druck-Gradientenfunktion ist, die aus einer Menge j von Gradientenfunktionen wählbar ist, wobei $h_{k[z]}(t, p_0(t-1), \bar{x})$ eine Zustandsänderungsfunktion ist, die aus einer Menge k von Zustandsänderungsfunktionen wählbar ist, und wobei der Vektor $\bar{x}$ die Zustände des Getriebes und/oder der Umgebung angibt.

25. Verfahren nach einem der Ansprüche 14 bis 24, **dadurch gekennzeichnet, dass** die Zustände der Umgebung die Schaltart und/oder die Abtriebsdrehzahl und/oder die Öltemperatur und/oder die Motordrehzahl und/oder das Motorausgangsmoment und/oder die Drosselklappenstellung umfassen.

26. Verfahren nach einem der Ansprüche 14 bis 25, **dadurch gekennzeichnet, dass** temperaturabhängige Nichtlinearitäten durch eine Temperatur-Kompensationseinrichtung ausgeglichen werden, und/oder dass Getriebe- und/oder Umgebungsgrößen durch eine Rückkopplungseinrichtung zurückkoppelt werden.

**Claims**

1. Pressure controller for programmed driving of at least one pressure actuator in order via the pressure (p) to influence the hydraulic configuration in a gearbox, the program-controlled driving taking place by changing states (z; Z0, Z2, Z3, Z4, Z5, Z6, Z7) from current states (z(t)) to subsequent states (z(t+1)), it being possible to configure the states (z; Z0, Z2, Z3, Z4, Z5, Z6, Z7) without changing the program, the profile of a desired pressure in the states (z; Z0, Z2, Z3, Z4, Z5, Z6, Z7) being composed at least of a base pressure ($p_B$) and an offset pressure ($p_O$) which are added, **characterized in that** the base pressure ($p_B$) and the offset pressure ($p_O$) are respectively determined with the aid of a function which can be selected from a set of provided functions.

2. Pressure controller according to Claim 1, **characterized in that** the states (z; Z0, Z1, Z2, Z3, Z4, Z5, Z6, Z7) are coordinated by a state machine.

3. Pressure controller according to one of the preceding claims, **characterized in that** criteria are provided, and **in that** upon fulfilment of at least one criterion a change takes place from a current state (z(t)) to a subsequent state (z(t+1)).

4. Pressure controller according to one of the preceding claims, **characterized in that** the criteria comprise time criteria.

5. Pressure controller according to one of the preceding claims, **characterized in that** the criteria comprise event criteria.

6. Pressure controller according to one of the preceding claims, **characterized in that** it cooperates with a gear shifting sequence controller which coordinates shifts which correspond to changes of configurations in a gearbox, a change of the configuration producing a variation in the power transmission of the gearbox, and a shift sequence being subdivided into phases (P0, P1, P2, P3, P4, P5, P6, P7).

7. Pressure controller according to one of the preceding claims, **characterized in that** the states (z; Z0, Z1, Z2, Z3, Z4, Z5, Z6, Z7) are assigned to the phases (P0, P1, P2, P3, P4, P5, P6, P7).

8. Pressure controller according to one of the preceding claims, **characterized in that** a number of states (Z0, Z1, Z2; Z3, Z5) are assigned to a phase (P0; P1) .

9. Pressure controller according to one of the preceding claims, **characterized in that** each state (z) is assigned a phase (e(z)), and **in that** it holds that

$$z(t+1) = \begin{cases} z(t)+1; & \text{if } e(z) < \text{phase}(t) \text{ and } e(z+1) \leq \text{phase}(t) \\ z(t)+1; & \text{if } \text{trg}_{m(z)} = 1 \text{ and } e(z+1) \leq \text{phase}(t) \\ z(t); & \text{otherwise} \end{cases},$$

in which $\text{trg}_{m(z)} = 1$ is satisfied when a criterion is fulfilled, and in which the phase(t) refers to the subsequent phase if a phase change is imminent.

10. Pressure controller according to one of the preceding claims, **characterized in that** it holds for the base pressure ($p_B$) that:

$$p_B(t) = f_{i(z)}(t, \overline{x}) \text{ with } z = z(t),$$

$f_{i(z)}$ being a base pressure function which can be selected from a set i of base pressure functions, and the vector $\overline{x}$ specifying the states of the gearbox and/or the environment.

11. Pressure controller according to one of the preceding claims, **characterized in that** it holds for the offset pressure ($p_O$) that

$$p_o(t) = \begin{cases} p_o(t-1) + \int g_{j(z)}(t, \overline{x}) dt; & \text{if } z := z(t) = z(t-1) \\ h_{k(z)}(t, p_o(t-1), \overline{x}); & \text{if } z := z(t) \neq z(t-1) \end{cases},$$

$g_j(t, \overline{x})$ being a pressure gradient function which can be selected from a set j of gradient functions, $h_{k(z)}(t, p_o(t-1), \overline{x})$ being a state change function which can be selected from a set k of state change functions, and the vector $\overline{x}$ specifying the states of the gearbox and/or the environment.

12. Pressure controller according to one of the preceding claims, **characterized in that** the states of the environment include the type of transmission and/or the charge speed and/or the oil temperature and/or the engine speed and/or the engine output torque and/or the throttle valve position.

13. Pressure controller according to one of the preceding claims, **characterized in that** it has a temperature compensation device which compensates temperature-dependent nonlinearities, and/or **in that** it has a feedback device which feedbacks the gearbox and/or environment variables.

14. Method for driving at least one pressure actuator under program control in order via the pressure to influence the hydraulic configuration in a gearbox, driving under program control taking place by changing states (z; Z0, Z2, Z3, Z4, Z5, Z6, Z7) from current states (z(t)) to subsequent states (z(t+1)), and the states, (z; Z0, Z2, Z3, Z4, Z5, Z6, Z7) being configured without changing the program, the profile of a desired pressure in the states (z; Z0, Z2, Z3, Z4, Z5, Z6, Z7) being composed of a base pressure ($p_B$) and at least one offset pressure ($p_O$) which are added together, **characterized in that** the base pressure ($p_B$) and the offset pressure ($p_O$) are respectively determined with the aid of a function which can be selected from a set of provided functions.

15. Method according to Claim 14, **characterized in that** the states (z; Z0, Z1, Z2, Z3, Z4, Z5, Z6, Z7) are combined by a state machine.

16. Method according to one of Claims 14 to 15, **characterized in that** criteria are provided, and **in that** in the event of fulfilment of at least one criterion a change is made from a current state (z(t)) to a subsequent state (z(t+1)).

17. Method according to one of Claims 14 to 16, **characterized in that** the criteria comprise time criteria.

18. Method according to one of Claims 14 to 17, **characterized in that** the criteria comprise event criteria.

**19.** Method according to one of Claims 14 to 18, **characterized in that** it cooperates with a method for coordinating gear shifting sequences which correspond to changes of configurations in a gearbox, a change of the configuration producing a variation in the power transmission of the gearbox, and a shift sequence being subdivided into phases (P0, P1, P2, P3, P4, P5, P6, P7).

**20.** Method according to one of Claims 14 to 19, **characterized in that** the states (z; Z0, Z1, Z2, Z3, Z4, Z5, Z6, Z7) are assigned to the phases (P0, P1, P2, P3, P4, P5, P6, P7).

**21.** Method according to one of Claims 14 to 20, **characterized in that** a number of states (Z0, Z1, Z2; Z3, Z5) are assigned to a phase (P0; P1).

**22.** Method according to one of Claims 14 to 21, **characterized in that** each state (z) is assigned a phase (e(z)), and **in that** it holds that

$$z(t+1)=\begin{cases} z(t)+1; & \text{if } e(z)<\text{phase}(t) \text{ and } e(z+1)\leq\text{phase}(t) \\ z(t)+1; & \text{if } trg_{m(z)}=1 \text{ and } e(z+1)\leq\text{phase}(t) \\ z(t); & \text{otherwise} \end{cases},$$

in which $trg_{m(z)} = 1$ is satisfied when a criterion is fulfilled, and in which the phase(t) refers to the subsequent phase if a phase change is imminent.

**23.** Method according to one of Claims 14 to 22, **characterized in that** it holds for the base pressure ($p_B$) that:

$$p_B(t)=f_{i(z)}(t,\overline{x}) \text{ with } z=z(t),$$

$f_{i(z)}$ being a base pressure function which can be selected from a set i of base pressure functions, and the vector $\overline{x}$ specifying the states of the gearbox and/or the environment.

**24.** Method according to one of Claims 14 to 23, **characterized in that** it holds for the offset pressure ($p_O$) that

$$p_o(t)=\begin{cases} p_o(t-1)+\int g_{j(z)}(t,\overline{x})\,dt; & \text{if } z:=z(t)=z(t-1) \\ h_{k(z)}(t,p_o(t-1),\overline{x}); & \text{if } z:=z(t)\neq z(t-1) \end{cases},$$

$g_j(t, \overline{x})$ being a pressure gradient function which can be selected from a set j of gradient functions, $h_{k(z)}(t,p_o(t-1), \overline{x})$ being a state change function which can be selected from a set k of state change functions, and the vector $\overline{x}$ specifying the states of the gearbox and/or the environment.

**25.** Method according to one of Claims 14 to 24, **characterized in that** the states of the environment include the type of transmission and/or the output speed and/or the oil temperature and/or the engine speed and/or the engine output torque and/or the throttle valve position.

**26.** Method according to one of Claims 14 to 25, **characterized in that** temperature-dependent nonlinearities are compensated by a temperature compensation device, and/or **in that** gearbox and/or environment variables are fed back by a feedback device.

**Revendications**

**1.** Dispositif de commande de pression pour la commande programmée d'au moins un organe de réglage de pression, pour influencer par la pression (p), l'ensemble de moyens hydrauliques d'une boîte de vitesses, la commande par programme se faisant par l'alternance d'états (z ; Z0, Z2, Z3, Z4, Z5, Z6, Z7) à partir des états actuels (z(t)), vers les états suivants (z(t+1)),

les états (z ; Z0, Z2, Z3, Z4, Z5, Z6, Z7) étant configurés sans modification du programme,

l'évolution de la pression de consigne dans les états (z ; Z0, Z2, Z3, Z4, Z5, Z6, Z7) étant la somme d'au moins une pression de base ($p_B$) et d'une pression de décalage ($p_O$),

**caractérisé en ce que**

la pression de base ($p_B$) et la pression de décalage ($p_O$) sont déterminées chaque fois à l'aide d'une fonction sélectionnée à partir d'ensembles de fonctions prédéterminées.

**2.** Dispositif de commande de pression selon la revendication 1,
**caractérisé en ce que**
les états (z ; Z0, Z2, Z3, Z4, Z5, Z6, Z7) sont coordonnés par une machine d'état.

**3.** Dispositif de commande selon l'une des revendications précédentes,
**caractérisé par**
des critères et lorsqu'au moins un critère est rempli, on a un changement entre un état actuel (z(t)) et l'état suivant (z(t+1)).

**4.** Dispositif de commande selon l'une des revendications précédentes,
**caractérisé en ce que**
les critères comprennent les critères de temps.

**5.** Dispositif de commande selon l'une des revendications précédentes,
**caractérisé en ce que**
les critères comprennent les critères d'évènements.

**6.** Dispositif de commande selon l'une des revendications précédentes,
**caractérisé en ce qu'**
il coopère avec une commande de déroulement de commutation qui coordonne les circuits, les changements d'ensemble de moyens dans la boîte de vitesses, un changement de moyens de la boîte de vitesses se traduisant par une modification de la transmission des forces par la boîte de vitesses, et
une exécution d'opération d'un circuit étant subdivisée en phase (P0, P1, P2, P3, P4, P5, P6, P7).

**7.** Dispositif de commande selon l'une des revendications précédentes,
**caractérisé en ce que**
les états (z ; Z0, Z1, Z2, Z3, Z4, Z5, Z6, Z7) correspondent aux phases (P0, P1, P2, P3, P4, P5, P6, P7).

**8.** Dispositif de commande selon l'une des revendications précédentes,
**caractérisé en ce que**
plusieurs états (Z0, Z1, Z2, Z3, Z4, Z5) sont associés à une phase (P0, P1).

**9.** Commande de pression selon l'une des revendications précédentes,
**caractérisée en ce qu'**
à chaque états (z) est associée une phase (e(z)) et on a les relations suivantes :

$$z(t+1) = \begin{cases} z(t) + 1; \text{ si } e(z) < \text{Phase}(t) \text{ et } e(z+1) \leq \text{Phase}(t) \\ z(t) + 1; \text{ si } trg_{m(z)} = 1 \text{ et } e(z+1) \leq \text{Phase}(t) \\ z(t); sinon \end{cases}$$

$trg_{m(z)} = 1$ étant rempli si un critère est rempli et si la phase (t) se rapporte à la phase suivante dans la mesure où il y a un changement de phase.

**10.** Commande de pression selon l'une des revendications précédentes,
**caractérisée en ce que**
pour la pression de base ($p_B$), on a la relation :

$$p_8(t) = f_{i(z)}(t, \vec{x}) \text{ avec } z = z(t)$$

dans laquelle $f_{i(z)}$ est une fonction de pression de base choisie dans un ensemble i de fonction de pression de base, et

le vecteur $\vec{x}$ correspond à l'état de la boîte de vitesses et/ou de l'environnement.

**11.** Commande de pression selon l'une des revendications précédentes,
**caractérisée en ce que**
pour la pression de décalage ($p_O$) on a la relation suivante :

$$p_O(t) = \begin{cases} p_O(t-1) + \int g_{j(z)}(t, \vec{x})dt; \text{ si } z := z(t) = z(t-1) \\ \\ h_{k(z)}(t, p_O(t-1), \vec{x}) \ ; \text{ si } z := z(t) \neq z(t-1 \end{cases}$$

dans laquelle, $g_j(t, \vec{x})$ est une fonction de gradient de pression choisie dans un ensemble j de fonction de gradient, et

$h_{k(z)}(t, p_O(t-1), \vec{x})$ est une fonction de variation d'état choisie dans un ensemble k de fonction de variation d'état, et

le vecteur $\vec{x}$ représente les états de la boîte de vitesses et/ou de l'environnement.

**12.** Commande de pression selon l'une quelconque des revendications précédentes,
**caractérisée en ce que**
les états de l'environnement comprennent le type de commutation et/ou la vitesse de rotation de sortie et/ou la température de l'huile et/ou la vitesse de rotation du moteur et/ou le couple de sortie du moteur et/ou la position du volet d'étranglement.

**13.** Commande de pression selon l'une des revendications précédentes,
**caractérisée en ce qu'**
elle comporte une installation de compensation de température qui compense les défauts de linéarité selon la température et/ou qui comporte une installation de réaction assurant le couplage en retour des grandeurs correspondant à la boîte de vitesses et/ou à l'environnement.

**14.** Procédé de commande par programme d'au moins un organe de réglage de pression pour influencer par la pression, l'ensemble des moyens hydrauliques dans une boîte de vitesses,
la commande par programme se faisant par changement des états (z ; Z0, Z2, Z3, Z4, Z5, Z6, Z7) à partir des états actuels (z(t)) vers les états suivants (z(t+1)), et
les états (z ; Z0, Z2, Z3, Z4, Z5, Z6, Z7) étant configurés sans variation du programme,
l'évolution de la pression de consigne se composant des états (z ; Z0, Z2, Z3, Z4, Z5, Z6, Z7) à partir de la pression de base ($p_B$) et d'au moins une pression de décalage ($p_O$) que l'on additionne,
**caractérisé en ce qu'**
on détermine la pression de base ($p_B$) et la pression de décalage ($p_O$) chaque fois à l'aide d'une fonction sélectionnée dans un ensemble de fonctions prédéterminées.

**15.** Procédé selon la revendication 14,
**caractérisé en ce que**
les états (z, Z0, Z1, Z2, Z3, Z4, Z5, Z6, Z7) sont coordonnés par une machine d'état.

**16.** Procédé selon l'une des revendications 14 ou 15,
**caractérisé par**
des critères et lorsqu'au moins un critère est rempli, on a un changement entre l'état actuel (z(t)) et l'état suivant (z(t+1)).

**17.** Procédé selon l'une des revendications 14 à 16,
**caractérisé en ce que**
les critères comprennent des critères de temps.

**18.** Procédé selon l'une quelconque des revendications 14 à 17,
**caractérisé en ce que**
les critères comportent des critères d'évènement.

**19.** Procédé selon l'une des revendications 14 à 18,
**caractérisé en ce qu'**
il coopère avec un procédé de coordination de l'exécution des commutations qui correspondent aux alternances entre les ensembles des moyens dans une boîte de vitesses et une alternance d'ensembles de moyens se traduit par une variation de la transmission de la force de la boîte de vitesses, et le déroulement d'une commutation est subdivisé en phases (P0, P1, P2, P3, P4, P5, P6, P7).

**20.** Procédé selon l'une des revendications 14 à 19,
**caractérisé en ce que**
les états (z ; Z0, Z1, Z2, Z3, Z4, Z5, Z6, Z7) sont associés aux phases (P0, P1, P2, P3, P4, P5, P6, P7).

**21.** Procédé selon l'une quelconque des revendications 14 à 20,
**caractérisé en ce que**
plusieurs états (Z0, Z1, Z2, Z3, Z5) sont associés à une phase (P0 ; P1).

**22.** Procédé selon l'une des revendications 14 à 21,
**caractérisé en ce qu'**
à chaque état (z) est associé une phase (e(z)) et on a les relations suivantes :

$$z(t+1) = \begin{cases} z(t)+1; \ si \ e(z) < Phase(t) \ et \ e(z+1) \leq Phase(t) \\ z(t)+1; \ si \ trg_{m(z)} = 1 \ et \ e(z+1) \leq Phase(t) \\ z(t); \sin\!on \end{cases}$$

$trg_{m(z)} = 1$ étant rempli si un critère est rempli et si la phase (t) se rapporte à la phase suivante dans la mesure où il y a un changement de phase.

**23.** Procédé selon l'une des revendications 14 à 22,
**caractérisé en ce que**
pour la pression de base ($p_B$), on a la relation :

$$p_8(t) = f_{i(z)} \ (t, \vec{x}) \ avec \ z = z(t)$$

dans laquelle $f_{i(z)}$ est une fonction de pression de base choisie dans un ensemble i de fonction de pression de base, et le vecteur $\vec{x}$ correspond à l'état de la boîte de vitesses et/ou de l'environnement.

**24.** Procédé selon l'une des revendications 14 à 23,
**caractérisé en ce que**
pour la pression de décalage ($p_o$) on a la relation suivante :

$$p_O(t) = \begin{cases} p_O(t-1) + \int g_{j(z)} \, (t, \vec{x})dt; \text{ si } z := z(t) = z(t-1) \\ \\ h_{k(z)} \, (t, p_O(t-1), \vec{x} \; ; \text{ si } z := z(t) \neq z(t-1) \end{cases}$$

dans laquelle, $g_j \, (t, \vec{x})$ est une fonction de gradient de pression choisie dans un ensemble j de fonction de gradient, et

$h_{k(z)} \, (t, \, p_O(t-1), \vec{x})$ est une fonction de variation d'état choisie dans un ensemble k de fonction de variation d'état, et

le vecteur $\vec{x}$ représente les états de la boîte de vitesses et/ou de l'environnement.

**25.** Procédé selon l'une des revendications 14 à 24,
**caractérisé en ce que**
les états de l'environnement comprennent le type de commutation et/ou la vitesse de rotation de sortie et/ou la température de l'huile et/ou la vitesse de rotation du moteur et/ou le couple de sortie du moteur et/ou la position du volet d'étranglement.

**26.** Procédé selon l'une des revendications 14 à 25,
**caractérisé en ce que**
les non linéarités dépendant de la température sont compensées par une installation de compensation de température et/ou on a une réaction par une installation de réaction pour les grandeurs relatives à la boîte de vitesses et/ou à l'environnement.

Fig.1

EP 1 328 742 B1

| | P0 | P1 | P2 | P4 | P5 | P7 |
|---|---|---|---|---|---|---|

$p$

$t$

| | Z0 | Z1 | Z2 | Z3 | Z4 | Z5 | Z6 | Z7 |
|---|---|---|---|---|---|---|---|---|

## Fig.2

| P0 | P1 | P3 |
|---|---|---|

| Z0 | Z1 | Z2 | Z3 | Z5 | Z7 |
|---|---|---|---|---|---|

## Fig.3

17

z(t) — 401

Zeitkriterium erfüllt? — 402

Nein

Phasenwechsel ? — 403

Nein

Ereigniskriterium erfüllt? — 404

Nein

Ja

Ja

Ja

e(z+1) ≤ Phase(t) — 405

Gehe zu Zustand z(t)+1 — 406

407 — Bleibe im Zustand z(t)

Fig.4

EP 1 328 742 B1

Fig.5

Fig.6

Fig.7

Fig.8

Fig.9